(19) Europäisches Patentamt
European Patent Office
Office européen des brevets

(11) EP 0 767 188 A1

(12) EUROPEAN PATENT APPLICATION

(43) Date of publication:
09.04.1997 Bulletin 1997/15

(51) Int Cl.[6]: C08G 18/79

(21) Application number: 96307231.9

(22) Date of filing: 03.10.1996

(84) Designated Contracting States:
DE FR GB

(30) Priority: 04.10.1995 JP 282605/95
09.02.1996 JP 48134/96

(71) Applicant: NISSHINBO INDUSTRIES, INC.
Chuo-ku, Tokyo (JP)

(72) Inventors:
- Imashiro, Yasuo, c/o Tokyo Res. Ctr.
Adachi-ku, Tokyo (JP)
- Takahashi, Ikuo, c/o Tokyo Res. Ctr.
Adachi-ku, Tokyo (JP)
- Horie, Naofumi, c/o Tokyo Res. Ctr.
Adachi-ku, Tokyo (JP)
- Yamane, Takeshi, c/o Tokyo Res. Ctr.
Adachi-ku, Tokyo (JP)

(74) Representative: Stuart, Ian Alexander et al
MEWBURN ELLIS
York House
23 Kingsway
London WC2B 6HP (GB)

# (54) Polyester/Urethane base coating composition and curing agent therefor

(57) A curing agent in the form of an isocyanate compound whose isocyanate group is blocked with a carbodiimide group is provided. When used in a urethane base coating composition, the carbodiimide-blocked isocyanate compound cancels its isocyanate blockage upon baking and heating, allowing the isocyanate group to exert curing action on the coating composition. When used in a polyester/urethane base coating composition, the curing agent is effective for improving the hydrolysis resistance of a coating. Particularly when a blocked isocyanate compound whose isocyanate group is blocked with an intramolecular carbodiimide group is used, the problem of generating harmful VOC and disgusting odor upon heating is eliminated. The polyester/urethane base coating composition using the curing agent cures into a tough aesthetic coating having chemical resistance, weather resistance and durability.

EP 0 767 188 A1

## Description

This invention relates to a curing agent for urethane base coating compositions, especially polyester/urethane base coating compositions. More particularly, it relates to a curing agent in the form of a blocked isocyanate compound whose isocyanate group is blocked with a carbodiimide group, which when used in a urethane base coating composition, allows the isocyanate group to exert curing action on the coating composition upon baking and heating without detracting from the advantages thereof and which eliminates the problem of generating harmful volatile organic compounds (VOC) and a concomitant disgusting odor upon heating of a coating, thereby improving the coating environment. This invention also relates to a polyester/urethane base coating composition containing the curing agent.

There is an increasing demand for urethane base coating compositions which have excellent properties including abrasion resistance, chemical resistance, acid resistance, water resistance, solvent resistance and impact resistance. Among others, typical two-part type polyester/urethane base coating compositions have been widely used because of their chemical resistance, hardness and stain resistance. The two-part type coating compositions, however, are inconvenient to use in practice. One-part type polyester/urethane base coating compositions are considered to avoid such inconvenience. Active research works have been made on the development of a one-part type thermosetting polyester/urethane base coating composition using a polyester polyol and a blocked isocyanate compound which is converted from an isocyanate compound as a curing agent by blocking an isocyanate group thereof with a volatile active hydrogen compound (or blocking agent) such as phenol. The one-part type thermosetting polyester/urethane base coating composition using a blocked isocyanate compound is used as having overcome the drawbacks of the prior art one-part type compositions and exhibiting equal performance to the two-part type compositions. However, it is desired to improve the hydrolysis resistance of polyester/urethane base coating compositions since the polyester polyol is liable to hydrolysis.

Also, numerous attempts have been made to develop various powder coating compositions without a need for solvent. Powder coating compositions are prepared by starting with a powdery polymer, pigment, curing agent and other additives and mechanically pulverizing them for mixing and as a general rule, they are applied by spray coating. Powder coating compositions have advantages including a relatively small loss on coating, economy, easy recovery of oversprayed coating composition, and possible recycle use. Also they are easy to handle since they are solventless and do not belong to the hazardous material class. The resultant coatings are tough and durable. For these reasons, a technique which enables to utilize the polyester/urethane coating composition as a powder coating composition has been developed. There are known polyester/urethane base powder coating compositions using the above-mentioned blocked isocyanate compound as a curing agent. Since these polyester/urethane base powder coating compositions are improved in weather resistance and processability and can form thin coatings with an aesthetic finish, the demand for them is increasing in these years.

These polyester/urethane base coating compositions using a blocked isocyanate compound as a curing agent cure through the following mechanism. The blocked isocyanate is inactive at room temperature. Upon baking and heating, the blocking agent is dissociated from the blocked isocyanate to regenerate an isocyanate group whereupon the regenerated isocyanate group undergoes urethanation reaction with the polyester polyol for curing.

Conventional blocking agents used for isocyanate compounds are compounds having active hydrogen, for example, phenols such as phenol and xylenol, aliphatic alcohols such as methanol, ethanol, and cyclohexyl alcohol, oximes such as methylethyloxime, amines, amides, imides, lactams such as ε-caprolactam, and dicarbonyl compounds such as diethyl malonate and ethyl acetoacetate. Since these blocking agents are relatively volatile, they leave the coating resin as gas when the isocyanate is dissociated therefrom upon heating of coatings, giving a disgusting odor which is undesirable in the coating environment and creating voids in the coatings. These odor and void problems offset the advantages of powder coating having a solventless feature.

To solve these problems, Japanese Patent Application Kokai (JP-A) Nos. 63322/1982, 63323/1982 and 63324/1982 propose curing agents which do not contain blocking agents as mentioned above by converting isophorone diisocyanate (IPDI) into a dimer in the presence of a special catalyst for blocking an isocyanate group as uretdion. However, since the dissociation of uretdion is very slow, it is difficult to produce fully cured coatings under normal baking conditions including a temperature of 170 to 200°C and a time of 10 to 30 minutes.

Preferred embodiments of the present invention may provide a curing agent for a urethane base coating composition which agent exerts excellent curing ability without detracting from the advantages of the urethane base coating composition, eliminates the problems of conventional blocking agents that they generate harmful volatile organic compounds (VOC) and a concomitant disgusting odor upon baking and heating of coatings, and particularly when used in a polyester/urethane base coating composition, permits the composition to form a tough, aesthetically attractive coating with chemical resistance, weather resistance and durability due to enhanced reactivity.

In another aspect, preferred embodiments may provide a polyester/urethane base coating composition comprising the curing agent.

Paying attention to the fact that an isocyanate group forms a uretone-imine bond with a carbodiimide group as

shown by the following reaction scheme:

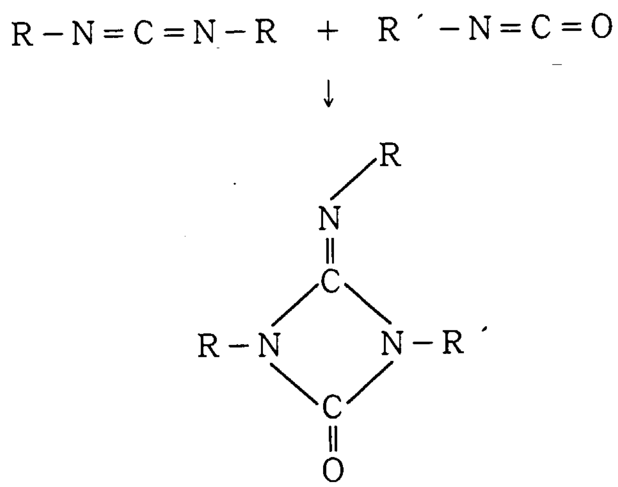

wherein R and R' are substituted or unsubstituted monovalent, generally hydrocarbon, groups, we have found that when a blocked isocyanate utilizing this reaction is used in a urethane base coating composition as a curing agent, excellent curing properties are exerted without detracting from the advantages of the coating composition.

A polyisocyanate undergoes decarboxylation and condensation of its isocyanate groups in the presence of a carbodiimidization catalyst to form a carbodiimide compound (or oligomer) having a carbodiimide (-N=C=N-) group and residual isocyanate groups, as shown by the following reaction scheme.

$$\text{OCN-R-NCO} + \text{OCN-R-NCO} \rightarrow \text{OCN-R-N=C=N-R-NCO} + CO_2$$

From the carbodiimide compound having a carbodiimide group and an isocyanate group, there is obtained a carbodiimide-blocked isocyanate if the isocyanate group of the carbodiimide compound is blocked with a carbodiimide group, especially with an intramolecular carbodiimide group. Since this carbodiimide-blocked isocyanate is a compound having carbodiimide and isocyanate groups, it eliminates a need for another blocking agent, and cancels the blockage upon baking and heating without the inconvenience of VOC generation and concomitant odor, allowing the isocyanate group to exert curing action.

According to the present invention, there is provided a curing agent for a urethane base coating composition, comprising an isocyanate compound having an isocyanate group blocked with a carbodiimide group.

Preferably, the isocyanate compound has an isocyanate group and a carbodiimide group wherein the isocyanate group is blocked with a carbodiimide group. More preferably, the isocyanate compound has an isocyanate group and a carbodiimide group in a molecule wherein the isocyanate group is blocked with the intramolecular carbodiimide group.

Preferably, the isocyanate compound having an isocyanate group and a carbodiimide group is an oligomer obtained by effecting decarboxylation and condensation of isocyanate groups of a polyisocyanate to a degree of polymerization of 2 to 30. The polyisocyanate may be dicyclohexylmethane diisocyanate, hexamethylene diisocyanate, isophorone diisocyanate, toluene diisocyanate, diphenylmethane diisocyanate or tolidine diisocyanate.

The curing agent is preferably used in a polyester/urethane base coating composition comprising a polyester as a major component.

The curing agent is preferably used in the urethane base coating composition which is a powder coating composition or a solvent type coating composition.

Also contemplated herein is a polyester/urethane base coating composition comprising a polyester as a major component and a curing agent as set forth above. The coating composition is typically used for metal precoating. Preferably the coating composition is a powder coating composition or a solvent type coating composition.

## DETAILED DESCRIPTION OF THE INVENTION

The curing agent for a urethane base coating composition according to the invention is defined as comprising a carbodiimide-blocked isocyanate compound. It is obtained by blocking an isocyanate (-NCO) group of an isocyanate compound with a carbodiimide (-N=C=N-) group.

The isocyanate compound used herein is not critical. It is generally one conventionally used as a curing agent for

coating compositions. The compound for blocking an isocyanate group is not critical as long as it has a carbodiimide group. The preferred isocyanate compound is an isocyanate compound having both an isocyanate group and a carbodiimide group. In blocking an isocyanate compound, its isocyanate group may be blocked with another compound having a carbodiimide group. Preferably, a compound having both an isocyanate group and a carbodiimide group is blocked in such a manner that its isocyanate group is blocked with its intramolecular carbodiimide group.

The compound having both an isocyanate group and a carbodiimide group is preferably a compound (or oligomer) which is obtained from a polyisocyanate by effecting decarboxylation and condensation of its isocyanate groups. The polyisocyanate used herein is not critical insofar as its isocyanate group can form a uretone-imine bond with a carbodiimide group. Preferred are diisocyanates, especially those diisocyanates having an isocyanate group at a less sterically hindered position. In this regard, among aromatic diisocyanates, those having an aromatic, aliphatic and/or alicyclic substituent having at least two carbon atoms at an ortho-position relative to an isocyanate group have the risk that the formation of uretone-imines is restrained due to their steric hindrance. Among aliphatic diisocyanates, such diisocyanates as tetramethylxylene diisocyanate (TMXDI) have great steric hindrance. Therefore, the most preferred diisocyanates are dicyclohexylmethane diisocyanate (HMDI), hexamethylene diisocyanate (HDI), isophorone diisocyanate (IPDI), toluene diisocyanate (TDI), diphenylmethane diisocyanate (MDI), and tolidine diisocyanate (TODI). Oligomers obtained from these diisocyanates should preferably have a degree of polymerization of 2 to 30, especially 2 to 15 and generally have an isocyanate group at each end. If desired, a compound having at least three isocyanate groups may be used in combination with the diisocyanate.

In preparing an oligomer from a polyisocyanate by effecting decarboxylation and condensation of isocyanate groups of polyisocyanate molecules, a carbodiimidization catalyst is used. Any of conventional well-known catalysts may be used for carbodiimidization. Preferred are phospholene oxide derivatives, especially those compounds of the following general formula (1) and double bond isomers thereof.

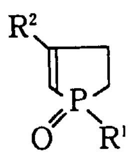

(1)

In formula (1), $R^1$ is a substituted or unsubstituted monovalent hydrocarbon group, preferably having 1 to 15 carbon atoms, especially 1 to 10 carbon atoms, for example, alkyl groups and aryl groups such as phenyl, and $R^2$ is a hydrogen atom or methyl group.

Examples of the phospholene oxide derivative include 3-methyl-1-phenyl-2-phospholene-1-oxide, 1-phenyl-2-phospholene-1-oxide, 1-methyl-2-phospholene-1-oxide, 1-ethyl-2-phospholene-1-oxide, 1,3-dimethyl-2-phospholene-1-oxide, and 1-ethyl-3-methyl-2-phospholene-1-oxide and double bond isomers thereof. They can be obtained by the method of JP-A 17990/1995. They are preferred from the standpoints of activity and commercial availability.

Preferably the phospholene oxide derivative is used in an amount of 0.01 to 1% by weight, especially 0.01 to 0.5% by weight based on the aromatic isocyanate and 1 to 3% by weight, especially 1 to 2% by weight based on the aliphatic isocyanate.

Condensation reaction is generally carried out in a gas atmosphere inert to isocyanate groups, for example, a nitrogen atmosphere. Condensation may be carried out either in a solventless system or in a solvent which is inert to isocyanate groups such as tetrahydrofuran (THF), Perclene (tetrachloroethylene) and toluene.

After appropriate reaction conditions are selected, condensation reaction is continued until a desired isocyanate content (NCO%) is reached. For the aromatic isocyanate, reaction is generally carried out at about 20 to 80°C for about 1 to 30 hours. For the aliphatic isocyanate, reaction is generally carried out at about 150 to 200°C for about 1 to 50 hours. More particularly, in the case of aliphatic or alicyclic diisocyanate compounds such as HMDI and IPDI, a carbodiimidization catalyst is added to the reactant, the reaction system is heated to 150 to 200°C, especially about 185°C, and reaction is continued for about 1 to 15 hours, especially about 3 to 10 hours until a degree of polymerization of 2 to 30, especially 2 to 10 is reached. In the case of MDI and TODI, on the other hand, the reactant in a solvent is heated, a carbodiimidization catalyst is added thereto, the reaction system is heated to 20 to 80°C, especially 50 to 70°C, and reaction is continued for about 1 to 30 hours, especially about 2 to 10 hours until a degree of polymerization of 2 to 30, especially 2 to 10 is reached. For the purpose of adjusting NCO%, an amine or alcohol may be added to the starting polyisocyanate to block some isocyanate groups thereof.

In the practice of the invention, after the completion of condensation reaction, the temperature of the reaction system is adjusted for effecting blocking reaction wherein an isocyanate group of the resulting oligomer is blocked with an intramolecular carbodiimide group, yielding a carbodiimide-blocked isocyanate. Conditions for this blocking reaction may be properly selected although a temperature of about 20 to 80°C and a time of about 3 to 50 hours are generally

used. For example, when HMDI or IPDI is used in the condensation reaction, the reaction system which has completed condensation reaction is adjusted to a temperature of 10 to 90°C, especially 30 to 80°C and maintained at the temperature for about 5 to 30 hours whereby an isocyanate group is blocked with a carbodiimide group. When MDI or TODI is used in the condensation reaction, on the other hand, the reaction system which has completed condensation reaction is adjusted to a temperature of 10 to 90°C, especially 40 to 80°C and maintained at the temperature for about 1 to 15 hours whereby an isocyanate group is blocked with a carbodiimide group.

Where it is desired to obtain polyfunctional blocked isocyanates, a polyfunctional isocyanate compound having at least three isocyanate groups may be used as part of the reactant for condensation reaction. The polyfunctional isocyanate compound can be synthesized using a bond resulting from trimerization reaction of an isocyanate, dimerization and trimerization reaction of an acylurea, biuret, allphanate, uretone-imine or carbodiimide, or reaction of a carbodiimide with an amine or carboxylic acid. The polyfunctional isocyanate compound can also be synthesized by subjecting a carbodiimide group-containing polyisocyanate as synthesized above to blocking reaction while adding thereto a catalyst or reactant capable of forming the above-mentioned bond.

Where reaction is effected in a solvent, the thus obtained blocked isocyanate oligomer is recovered by conventional methods, for example, by distilling off the solvent under vacuum at a temperature of lower than 80°C and collecting the residue. Alternatively, the oligomer is recovered by cooling the reaction solution or adding to the reaction solution a solvent serving as a poor solvent to the blocked isocyanate, thereby causing the blocked isocyanate to precipitate, and spray drying or filtering the resulting slurry. The oligomer which is separated from the solvent in this way is ready for use as a curing agent for urethane base coating compositions. It is noted that when the blocked isocyanate oligomer is used as a curing agent for a solvent type coating composition, the reaction solution may be used without solvent removal or after removing part of the solvent. Where the blocked isocyanate is available in a gel form, the gel is milled by mechanical pulverization and the blocked isocyanate is separated from the milled solution. When the blocked isocyanate of the invention is used as a curing agent in a powder coating composition, the blocked isocyanate, if it is not powdery as recovered, is pulverized into powder by an appropriate means and optionally milled to an appropriate particle size prior to use.

It is noted that the blocked isocyanate compound should preferably have a blocked isocyanate content (blocked NCO%), from which an isocyanate group is regenerated upon heating, of 2 to 30%, especially 3 to 25%. If the blocked isocyanate content is too low, the compound may fail to provide a sufficient amount of isocyanate group to accomplish curing. It is difficult to block more than 30% of isocyanate group. The blocked isocyanate compound should preferably have an unblocked or free isocyanate content (free NCO%) of 1% or less. A blocked isocyanate compound having a free isocyanate content of more than 1% may undesirably cause thickening and gelation when mixed with a polyol.

The curing agent of the invention is applicable to a variety of urethane base coating compositions in which isocyanates are used as a curing agent, especially polyester/urethane base coating compositions containing a polyester as a major component. When a coating of a polyester coating composition is baked and heated, the curing agent of the invention cancels the carbodiimide blockage to regenerate an isocyanate group which exerts its own curing ability to cure the coating. Carbodiimide groups are left in the coating. The residual carbodiimide groups are effective for improving the hydrolysis resistance of the polyester coating, preventing the polyester coating from deterioration.

The polyester which can be used as a major component in the polyester/urethane base coating composition includes polyester polyols, polyester amide polyols, polyether polyols, polyether-ester polyols, and polycarbonate polyols. Modified ones of these resins are also useful.

Illustrative examples are polyester polyols obtained by reacting polyhydric alcohols such as ethylene glycol, diethylene glycol, propylene glycol, dipropylene glycol, polypropylene glycol, neopentyl glycol, butane diol, pentane diol, hexane diol, cyclohexane diol, cyclohexane dimethanol, 2,2-dimethyl-3-hydroxypropyl-2,2-dimethyl-3-hydroxypropionate, polytetramethylene ether glycol, polycaprolacton polyol, glycerin, sorbitol, anisole, trimethylol ethane, trimethylol propane, trimethylol butane, hexane triol, and nonane diol with polybasic acids, esters and anhydrides thereof such as phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, Amic anhydride, trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebasic acid, succinic acid, succinic anhydride, lactic acid, and cyclohexane-1,4-dicarboxylic acid, and modified products of these polyester polyols; and polyester amide polyol resins obtained by dehydration/condensation reaction of diamines, triamines and aminoalcohols such as hexamethylene diamine, xylene diamine, isophorone diamine, monoethanol amine, and isopropanol triamine with the above-mentioned polybasic acids, acid esters, and acid anhydrides.

Also included are polyester polyols such as lactone polyester polyols obtained by ring-opening polymerization of lactones such as ε-caprolactone and δ-valerolactone.

Exemplary polyether polyols include polyethylene glycol, polypropylene ether polyols, and polytetramethylene ether polyols. Exemplary polyether-ester polyols include polyester polyols prepared from the above-mentioned polyether polyols and the above-mentioned dicarboxylic acids or anhydrides.

Exemplary polycarbonate polyols are those obtained by reacting hexane glycol, 3-methyl-1,5-pentane diol, 1,4-cyclohexane dimethanol or the like with diethyl carbonate, diphenyl carbonate or the like.

Also included in the polyesters or ester group-containing resins are urethane compounds obtained from polyisocyanates (e.g., 2,4-tolylene diisocyanate, 2,6-tolylene diisocyanate, xylene-1,4-diisocyanate, xylene-1,3-diisocyanate, 4,4-diphenylmethane diisocyanate, and 4,4-diphenylether diisocyanate) and polyols (e.g., polyester polyols, polyester ether polyols as obtained by polycondensation reaction of polybasic acids with polyhydric alcohols and ring-opening polymerization of lactones). Alkyd resins including unsaturated polyester resins are also useful polyesters.

In the polyester/urethane coating composition, any desired optional components may be added in addition to the above-mentioned components. Optional components are, for example, opacifying pigments and fillers, curing catalysts, compatible polyacrylates, coating surface regulating agents, surfactants, dispersants, plasticizers, UV absorbers, and antioxidants. Exemplary of the pigment are titanium white, Cyanine Blue, Chrome Yellow, Watchung Red, red iron oxide, carbon black, and Aniline Black 7. These optional components are added in conventional amounts insofar as the objects of the invention are not impaired.

The amount of the blocked isocyanate blended in the polyester is properly determined in accordance with the type of polyester and other factors. For use as a powder coating composition, the molar ratio of the entire NCO groups relative to the OH groups of polyester, which varies with baking conditions, is preferably adjusted in the range between about 1.2 and about 2.5 when baking is effected at a temperature of 170 to 200°C for 10 to 30 minutes. For use as a solvent type coating composition, the same molar ratio is preferably adjusted in the range between about 1.1 and about 2.5.

The curing agent of the invention may be blended in any form of coating composition while the coating composition may be of well-known formulation. A polyester/urethane coating composition, for example, may be of two-part type. However, the inventive curing agent is advantageously used in a polyester/urethane coating composition of one-part type comprising a base polymer and a curing agent because the inventive curing agent having its isocyanate group blocked with a carbodiimide group is prohibited from provoking curing reaction at room temperature.

Also the inventive curing agent is advantageously used in a powder coating composition because its softening temperature is appropriate for powder coating.

The inventive curing agent is also advantageously used in a solvent type coating composition. It is prepared by milling necessary components in the presence of an organic solvent in a roll mil, ball mill or pressure kneader, obtaining a coating solution. An organic solvent which is non-polymerizable and free of active hydrogen is desirably used for the purpose of optimizing the viscosity of a coating solution upon application. Exemplary organic solvents are toluene, xylene, methyl ethyl ketone, methyl isobutyl ketone, ethyl acetate, butyl acetate, and cyclohexanone. It is preferred that one or more solvents having a desired solubility and evaporation rate are selected from these organic solvents. Since the optimum viscosity of coating solution widely varies with an application technique, type of applicator, application speed, coating thickness, and surface state, the amount of the organic solvent used as a diluent is properly determined by taking into account these factors. It is preferred that the majority of the organic solvent or diluent be evaporated off from a coating in the evaporating step or forced heat drying step prior to curing of the coating. If a substantial amount of the organic solvent is left in the coating, it would adversely affect the hardness, adhesion, water resistance, and chemical resistance of the coating.

The solvent type coating composition is applied to form a thin film structure, for example, by spraying, roller coating, roll coating, curtain flow, spray coating, casting, and knife edge coating. Heating or pressurizing may be employed if effective for facilitating application.

Heat curing is to increase the temperature of a coating to promote crosslinking reaction of the coating composition. Various heating methods using an electric heating furnace, hot air heating furnace, infrared heating furnace, and high frequency heating furnace are useful. For baking, an appropriate baking temperature and time are selected by taking into account the formulation of a coating composition, the size and gage of a substrate (e.g., steel plate), and the capacity of a baking furnace.

In particular, the polyester/urethane base coating composition is advantageously used for precoating metal members, that is, in the preparation of precoated metal members. The precoated metal technology is to precoat metal members such as iron plates, aluminum plates, galvanized plates, and stainless steel plates with paint and to process the precoated metal members as by shaping, bending, embossing, roll forming, and drawing. The precoated metal technology is widely employed in the recent years since it can apply a uniform coating to a surface of complex configuration. Since the precoated metal technology carries out processing and assembling steps subsequent to coating, the coating composition for precoating metal members is required to withstand mechanical impacts applied upon shaping and processing such as bending, roll forming and embossing and to possess good adhesion, follow-up ability, mar resistance, and stain resistance. Weather resistance is additionally required if precoated metal members are for outdoor use. The polyester/urethane base coating composition according to the invention cures into a coating which is improved in shelf stability, adhesion, water resistance, handling and safety. Metal members precoated therewith are useful as electric parts and building metal exteriors.

The curing agent for a urethane base coating composition according to the invention may be used in combination with another well-known blocked isocyanate if necessary. In this case, the amount of the other blocked isocyanate blended should desirably be minimized since the amount of VOC generated upon heating of a coating must be taken into account.

The curing agent according to the present invention, when used in a urethane base coating composition, cancels its isocyanate blockage to regenerate an isocyanate group upon baking and heating, allowing the isocyanate group to exert curing action on the coating composition without detracting from the advantages thereof. When used in a polyester/urethane base coating composition, the curing agent is effective for improving the hydrolysis resistance of a coating. Particularly when a blocked isocyanate compound whose isocyanate group is blocked with an intramolecular carbodiimide group is used, the problem of generating harmful VOC and a concomitant disgusting odor upon heating of a coating is eliminated. The polyester/urethane base coating composition using the inventive curing agent cures into a tough, aesthetically attractive coating with chemical resistance, weather resistance and durability due to enhanced reactivity.

## EXAMPLE

Examples of the present invention are given below by way of illustration and not by way of limitation.

### Example 1

To 300 g of HMDI was added 1.5 g of 3-methyl-1-phenyl-2-phospholene-1-oxide as a carbodiimidization catalyst. Condensation reaction was effected in a nitrogen stream at 185°C for 10 hours, obtaining a polycarbodiimide resin or carbodiimide group-containing polyisocyanate having a degree of polymerization of 3. This polyisocyanate was subject to further reaction at 50°C for 20 hours for blocking a terminal isocyanate group with an intramolecular carbodiimide group. The resulting resin was finely divided by mechanical pulverization, obtaining a blocked isocyanate powder having a mean particle size of 100 µm. The blocked isocyanate powder had a blocked NCO content of 9.17% and a melting point of about 70°C.

### Example 2

To 300 g of HMDI was added 1.5 g of 3-methyl-1-phenyl-2-phospholene-1-oxide. Condensation reaction was effected at 185°C for 5 hours while bubbling nitrogen gas, obtaining a carbodiimide group-containing polyisocyanate having a degree of polymerization of 10. This polyisocyanate was subject to further reaction at 50°C for 20 hours for blocking a terminal isocyanate group with an intramolecular carbodiimide group. The resulting resin was finely divided by mechanical pulverization, obtaining a blocked isocyanate powder having a mean particle size of 100 µm. The blocked isocyanate powder had a blocked NCO content of 3.44% and a melting point of about 80°C.

### Example 3

A blocked isocyanate powder having a mean particle size of 100 µm was obtained as in Example 2 except that 300 g of IPDI was used instead of 300 g of HMDI. The blocked isocyanate powder had a blocked NCO content of 11.1% and a melting point of about 85°C.

### Example 4

To 100 g of MDI was added 500 g of THF and then 0.1 g of 3-methyl-1-phenyl-2-phospholene-1-oxide. Condensation reaction was effected in a nitrogen atmosphere at 65°C for 3 hours. The temperature was lowered to 40°C and reaction was effected for a further 2 hours for blocking residual isocyanate groups with intramolecular carbodiimide groups. Thereafter the temperature was further lowered to 15°C and the reaction solution was cooled for 2 hours with stirring. The resulting slurry solution was atomized by spray drying, obtaining a blocked isocyanate powder having a mean particle size of 50 µm in which a terminal isocyanate group was blocked with an intramolecular carbodiimide group. The blocked isocyanate powder had a blocked NCO content of 3.64% and a melting point of about 110°C.

### Example 5

To 100 g of MDI was added 500 g of THF and then 0.1 g of 3-methyl-1-phenyl-2-phospholene-1-oxide. Condensation reaction was effected in a nitrogen atmosphere at 65°C for 1-1/2 hours. The temperature was lowered to 40°C and reaction was effected for a further 2 hours for blocking residual isocyanate groups with intramolecular carbodiimide

groups. Thereafter the temperature was further lowered to 15°C and the reaction solution was cooled for 3 hours with stirring. The resulting slurry solution was atomized by spray drying, obtaining a blocked isocyanate powder having a mean particle size of 50 µm in which a terminal isocyanate group was blocked with an intramolecular carbodiimide group. The blocked isocyanate powder had a blocked NCO content of 9.68% and a melting point of about 110°C.

Example 6

The procedure of Example 4 was repeated except that 100 g of TODI was used instead of 100 g of MDI, obtaining a blocked isocyanate powder having a mean particle size of 50 µm in which a terminal isocyanate group was blocked with an intramolecular carbodiimide group. The blocked isocyanate powder had a blocked NCO content of 3.41% and a melting point of about 105°C.

Example 7

The procedure of Example 5 was repeated except that 100 g of TODI was used instead of 100 g of MDI, obtaining a blocked isocyanate powder having a mean particle size of 50 µm in which a terminal isocyanate group was blocked with an intramolecular carbodiimide group. The blocked isocyanate powder had a blocked NCO content of 9.09% and a melting point of about 110°C.

Example 8

To 100 g of TDI was added 500 g of Perclene and then 0.1 g of 3-methyl-1-phenyl-2-phospholene-1-oxide. Condensation reaction was effected in a nitrogen atmosphere at 110° for 1 hour. The temperature was lowered to 60°C and reaction was effected for a further 1-1/2 hours for blocking residual isocyanate groups with intramolecular carbodiimide groups. The resulting solution was gel and it was mechanically pulverized and dried at 60°C, obtaining a blocked isocyanate powder having a mean particle size of 80 µm in which a terminal isocyanate group was blocked with an intramolecular carbodiimide group. The blocked isocyanate powder had a blocked NCO content of 10.2% and a melting point of about 105°C.

Example 9

To 500 g of HMDI was added 2.5 g of 3-methyl-1-phenyl-2-phospholene-1-oxide. Condensation reaction was effected in a nitrogen stream at 185°C for 5 hours, obtaining 334.7 g of a carbodiimide group-containing polyisocyanate having a NCO.content of 25.1%. This polyisocyanate was dissolved in 1000 ml of THF. The solution was kept at a temperature of 70°C, and 9.0 g of butane diol was added thereto. Reaction was effected for 2 hours for permitting some isocyanate groups of the polycarbodiimide resin to form urethane bonds with alcohol groups and blocking residual isocyanate groups with intramolecular carbodiimide groups. The resulting compound was dried and pulverized, obtaining a blocked isocyanate powder having a mean particle size of 120 µm in which a terminal isocyanate group was blocked with an intramolecular carbodiimide group. The blocked isocyanate powder had a blocked NCO content of 21.9% and a melting point of about 105°C.

Example 10

In 800 g of toluene were dissolved 522 g of TDI and 18.6 g of ethylene glycol. To the solution was added 0.5 g of 3-methyl-1-phenyl-2-phospholene-1-oxide. Condensation reaction was effected in a nitrogen atmosphere at 100°C for 5 hours. The temperature was lowered to 70°C and reaction was effected for a further 2 hours for blocking residual isocyanate groups with intramolecular carbodiimide groups. The resulting solution was gel and it was mechanically pulverized and dried at 60°C, obtaining a blocked isocyanate powder having a mean particle size of 90 µm in which a terminal isocyanate group was blocked with an intramolecular carbodiimide group. The blocked isocyanate powder had a blocked NCO content of 18.2% and a melting point of about 100°C.

Example 11

To 300 g of HMDI was added 1.5 g of 3-methyl-1-phenyl-2-phospholene-1-oxide as a carbodiimidization catalyst. Condensation reaction was effected in a nitrogen stream at 185°C for 15 hours, obtaining a polycarbodiimide resin or carbodiimide group-containing polyisocyanate having a degree of polymerization of 10. This polyisocyanate was subject to further reaction at 70°C for 24 hours for blocking a terminal isocyanate group with an intramolecular carbodiimide group. Toluene, 100 g, was mixed with 100 g of the resulting resin for dissolution, obtaining a blocked isocyanate

solution. The blocked isocyanate compound had a blocked NCO content of 3.44%.

Example 12

The procedure of Example 11 was repeated except that IPDI was used instead of HMDI, obtaining a blocked isocyanate solution. The blocked isocyanate compound had a blocked NCO content of 4.5%.

Example 13

To a mixture of 235.8 g of HMDI and 24.8 g of cyclohexyl isocyanate was added 1.5 g of 3-methyl-1-phenyl-2-phospholene-1-oxide as a carbodiimidization catalyst. Condensation reaction was effected in a nitrogen stream at 185°C for 15 hours, obtaining a polycarbodiimide resin having a degree of polymerization of 10. To 218 g of this polycarbodiimide resin was added 16.6 g of HDI. Reaction was effected at 70°C for 24 hours for blocking an isocyanate group of HDI with a carbodiimide group. Toluene, 100 g, was mixed with 100 g of the resulting resin for dissolution, obtaining a blocked isocyanate solution. The blocked isocyanate compound had a blocked NCO content of 3.58%.

Example 14

To 300 g of HMDI was added 1.5 g of 3-methyl-1-phenyl-2-phospholene-1-oxide as a carbodiimidization catalyst. Condensation reaction was effected in a nitrogen stream at 185°C for 15 hours, obtaining a polycarbodiimide resin or carbodiimide group-containing polyisocyanate having a degree of polymerization of 10. To 236 g of this polyisocyanate was added 16.6 g of HDI. Reaction was effected at 70°C for 24 hours for blocking a terminal isocyanate group with an intramolecular carbodiimide group. Toluene, 100 g, was mixed with 100 g of the resulting resin for dissolution, obtaining a blocked isocyanate solution. The blocked isocyanate compound had a blocked NCO content of 8.16%.

Comparative Example 1

To 266 g of IPDI was added 63.6 g of diethylene glycol. Reaction was effected at 70°C for 1 hour. The temperature was raised to 100°C and reaction was effected for a further 1 hour, obtaining a resin having a NCO content of 15.4%. The temperature was then lowered to 80°C. While the reaction solution was kept at this temperature, ε-caprolactam was added in an equivalent amount to the isocyanate group, blocking residual isocyanate groups.

Examples 15-26 & Comparative Examples 2-3

Polyethylene/urethane powder coating compositions were formulated using the blocked isocyanates obtained in Examples 1-10 and Comparative Example 1 as a curing agent. The polyester component used in each composition is a resin as shown below.

Polyester component

Resin A

A mixture of 1746 g of dimethyl terephthalate, 416 g of 2,2-dimethylpropane-1,3-diol, 540 g of 1,4-dimethylolcyclohexane, and 335 g of trimethylolpropane was heated at 160°C to dissolve substantially all the ingredients. Then di-n-butyltin oxide was added to the solution in an amount of 0.1% by weight. The solution was subject to reaction at 185°C for 3 hours and then at 230°C for a further 10 hours, obtaining a polyester component designated Resin A. This polyester component had an OH value of 100 mg KOH/gram, an acid value of less than 1 mg KOH/gram, and a melting point of about 95°C.

Resin B

A mixture of 1495 g of terephthalic acid, 1748 g of dimethyl terephthalate, 354 g of hexane-1,6-diol, 1354 g of neopentyl glycol, 432 g of 1,4-dimethylolcyclohexane, and 134 g of trimethylolpropane was heated at 160°C to dissolve substantially all the ingredients. Then di-n-butyltin oxide was added to the solution in an amount of 0.1% by weight. The solution was subject to reaction at 185°C for 3 hours and then at 230°C for a further 10 hours, obtaining a polyester component designated Resin B. This polyester component had an OH value of 55 mg KOH/gram, an acid value of less than 1 mg KOH/gram, and a melting point of about 80°C.

Powder coating

Powder coating compositions were prepared in accordance with the following formulation by a well-known method.

Composition 1

| | |
|---|---|
| 26.3% | Resin A |
| 40.7% | Blocked isocyanate of Example 1 |
| 32.5% | White pigment ($TiO_2$) |
| 0.5% | Compatible polyacrylate |

Composition 2

| | |
|---|---|
| 13.0% | Resin A |
| 54.0% | Blocked isocyanate of Example 2 |
| 32.5% | White pigment ($TiO_2$) |
| 0.5% | Compatible polyacrylate |

Composition 3

| | |
|---|---|
| 29.4% | Resin A |
| 37.6% | Blocked isocyanate of Example 3 |
| 32.5% | White pigment ($TiO_2$) |
| 0.5% | Compatible polyacrylate |

Composition 4

| | |
|---|---|
| 39.3% | Resin B |
| 27.7% | Blocked isocyanate of Example 3 |
| 32.5% | White pigment ($TiO_2$) |
| 0.5% | Compatible polyacrylate |

Composition 5

| | |
|---|---|
| 13.7% | Resin A |
| 53.3% | Blocked isocyanate of Example 4 |
| 32.5% | White pigment ($TiO_2$) |
| 0.5% | Compatible polyacrylate |

Composition 6

| | |
|---|---|
| 27.1% | Resin A |
| 39.9% | Blocked isocyanate of Example 5 |
| 32.5% | White pigment ($TiO_2$) |

| | |
|---|---|
| 0.5% | Compatible polyacrylate |

Composition 7

| | |
|---|---|
| 37.0% | Resin B |
| 29.9% | Blocked isocyanate of Example 5 |
| 32.6% | White pigment ($TiO_2$) |
| 0.5% | Compatible polyacrylate |

Composition 8

| | |
|---|---|
| 13.0% | Resin B |
| 54.0% | Blocked isocyanate of Example 6 |
| 32.5% | White pigment ($TiO_2$) |
| 0.5% | Compatible polyacrylate |

Composition 9

| | |
|---|---|
| 34.9% | Resin B |
| 30.0% | Blocked isocyanate of Example 7 |
| 32.5% | White pigment ($TiO_2$) |
| 0.5% | Compatible polyacrylate |

Composition 10

| | |
|---|---|
| 28.0% | Resin A |
| 39.0% | Blocked isocyanate of Example 8 |
| 32.5% | White pigment ($TiO_2$) |
| 0.5% | Compatible polyacrylate |

Composition 11

| | |
|---|---|
| 40.6% | Resin A |
| 26.4% | Blocked isocyanate of Example 9 |
| 32.5% | White pigment ($TiO_2$) |
| 0.5% | Compatible polyacrylate |

Composition 12

| | |
|---|---|
| 37.6% | Resin A |
| 29.4% | Blocked isocyanate of Example 10 |
| 32.5% | White pigment ($TiO_2$) |
| 0.5% | Compatible polyacrylate |

Composition 13 (comparative example)

| | |
|---|---|
| 34.8% | Resin A |
| 32.2% | Blocked isocyanate of Comparative Example 1 |
| 32.5% | White pigment ($TiO_2$) |
| 0.5% | Compatible polyacrylate |

Composition 14 (comparative example)

| | |
|---|---|
| 44.4% | Resin B |
| 22.6% | Blocked isocyanate of Comparative Example 1 |
| 32.5% | White pigment ($TiO_2$) |
| 0.5% | Compatible polyacrylate |

The powder coating compositions prepared in accordance with Compositions 1 to 13 were applied to form coatings which were baked at a temperature of 180°C (unless otherwise stated) for 20 minutes. The coatings were measured for mechanical properties according to JIS K-5400. The results are shown in Table 1.

Table 1

| | Pencil hardness test | Erichsen test (mm) | Specular gloss at 60° | |
|---|---|---|---|---|
| Composition 1 | 2H | 9.1 | 87 | Example 15 |
| Composition 2 | 2H | 10.5 | 89 | Example 16 |
| Composition 3 | 2H | 10.1 | 89 | Example 17 |
| Composition 4 | H | 9.5 | 90 | Example 18 |
| Composition 5 | 2H | 9.8 | 92 | Example 19 |
| Composition 6 | 2H | 10.7 | 91 | Example 20 |
| Composition 7 | H | 10.9 | 97 | Example 21 |
| Composition 8 | H | 10.5 | 87 | Example 22 |
| Composition 9 | H | 10.3 | 90 | Example 23 |
| Composition 10 | 2H | 10.9 | 90 | Example 24 |
| Composition 11 | 2H | 10.1 | 91 | Example 25 |
| Composition 12 | 2H | 10.5 | 88 | Example 26 |
| Composition 13 | | | | Comparative |
| Baking 200°C | H | 8.1 | 83 | Example 2 |
| Baking 180°C | H | 1.7 | 90 | |
| Baking 170°C | H | 0.5 | 87 | |
| Composition 14 | | | | Comparative |
| Baking 200°C | HB | 8.2 | 75 | Example 3 |
| Baking 180°C | HB | 3.5 | 78 | |
| Baking 170°C | HB | 1.2 | 76 | |

Example 27

The polyester Resin A, 100 g, was dissolved in toluene to form a resin solution containing 50% of the polyester component. The blocked isocyanate solution of Example 11, 218 g as solids, was added to the resin solution and 16 g of titanium dioxide as a pigment was added thereto. The mixture was thoroughly milled in a ball mill. The solution was sprayed to a steel plate of 0.3 mm thick to form a coating so as to provide a dry coating gage of 20 µm. The coating was baked at 230°C for 30 seconds, obtaining a coated plate.

Example 28

A coated plate was obtained as in Example 27 except that 164 g of the carbodiimide-blocked isocyanate compound of Example 12 was used and the amount of titanium dioxide pigment was changed to 13.2 g.

Example 29

A coated plate was obtained as in Example 27 except that 209 g of the carbodiimide-blocked isocyanate compound of Example 13 was used and the amount of titanium dioxide pigment was changed to 13.2 g.

Example 30

A coated plate was obtained as in Example 27 except that 91.6 g of the carbodiimide-blocked isocyanate compound of Example 14 was used and the amount of titanium dioxide pigment was changed to 13.2 g.

Comparative Example 4

A coated plate was obtained as in Example 27 except that 48.5 g of the blocked isocyanate compound of Comparative Example 1 was used and the amount of titanium dioxide pigment was changed to 7.4 g.

The coated plates were examined by the following tests.

Adhesion

Adhesion was examined in accordance with the crosshatch adhesion test of JIS K-5400. After a coated plate was allowed to stand at 20°C for 1 hour, the coating was scribed to define 100 sections of 1 $cm^2$. A pressure-sensitive adhesive tape was applied to the coating, fully pressed thereto, and quickly peeled. The number of coating sections left on the plate was counted for evaluating adhesion. The result is expressed as "n/100" wherein n is the number of coating sections left on the plate.

Solvent resistance

A coated plate was rubbed on the coating 100 times with gauze impregnated with xylene solvent. The coating surface was visually observed for defects including peeling, scratches, and delustering. A defective coating was rated "Reject" whereas a sound coating was rated "OK."

Acid resistance

A coated plate was immersed in an aqueous solution of 5% by weight hydrochloric acid at 20°C for 24 hours, washed with water, and visually observed for defects including peeling, scratches, and delustering. A defective coating was rated "Reject" whereas a sound coating was rated "OK."

Alkali resistance

A coated plate was immersed in an aqueous solution of 5% by weight sodium hydroxide at 20°C for 24 hours, washed with water, and visually observed for defects including peeling, scratches, and delustering. A defective coating was rated "Reject" whereas a sound coating was rated "OK."

Anti-staining

With red ink, lines were drawn on the coating surface. After 24 hours, the coating surface was wiped with gauze impregnated with ethanol and visually observed for red line traces. A marked coating was rated "Reject," a slightly marked coating was rated "Fair," and a mark-free coating was rated "OK."

Water resistance

A coated plate was immersed in a constant temperature water bath at 50°C for 10 days. The coating surface was visually observed for defects including delustering and blister. A defective coating was rated "Reject" whereas a sound coating was rated "OK."

Pencil hardness

A coating was tested at 20°C using Mitsubishi Uni pencils. The pencil hardness reported is one rank lower than the pencil hardness with which the coating was scratched.

The results are shown in Table 2.

Table 2

| Example | E27 | E28 | E29 | E30 | CE4 |
|---|---|---|---|---|---|
| Adhesion | 100 | 100 | 100 | 100 | 93 |
| Solvent resistance | OK | OK | OK | OK | Reject |
| Acid resistance | OK | OK | OK | OK | Reject |
| Alkali resistance | OK | OK | OK | OK | Reject |
| Anti-staining | OK | OK | OK | OK | Reject |
| Water resistance | OK | OK | OK | OK | Reject |
| Pencil hardness | 2H | 2H | 2H | 2H | 2H |

It is evident form Table 2 that a pre-coating composition for metal according to the invention is improved in adhesion, solvent resistance, acid resistance, alkali resistance, anti-staining, and water resistance.

Although some preferred embodiments have been described, many modifications and variations may be made thereto in the light of the above teachings. It is therefore to be understood that within the scope of the appended claims, the invention may be practiced otherwise than as specifically described.

## Claims

**1.** A curing agent for a urethane base coating composition, comprising a carbodiimide-blocked isocyanate in the form of an isocyanate compound having an isocyanate group blocked with a carbodiimide group.

**2.** The curing agent of claim 1 wherein the isocyanate compound has an isocyanate group and a carbodiimide group wherein the isocyanate group is blocked with a carbodiimide group.

**3.** The curing agent of claim 1 wherein the isocyanate compound has an isocyanate group and a carbodiimide group in a molecule wherein the isocyanate group is blocked with the intramolecular carbodiimide group.

**4.** The curing agent of any preceding claim wherein the isocyanate compound having an isocyanate group and a carbodiimide group is an oligomer obtained by effecting decarboxylation and condensation of isocyanate groups of a polyisocyanate to a degree of polymerization of 2 to 30.

**5.** The curing agent of claim 4 wherein the polyisocyanate is selected from the group consisting of dicyclohexylmethane diisocyanate, hexamethylene diisocyanate, isophorone diisocyanate, toluene diisocyanate, diphenylmethane diisocyanate, and tolidine diisocyanate.

**6.** A polyester/urethane base coating composition comprising a polyester as a major component and a curing agent as set forth in any preceding claim.

**7.** The coating composition of claim 6 which is used for metal precoating.

**8.** The coating composition of claim 6 or 7 which is a powder coating composition.

**9.** The coating composition of claim 6 or 7 which is a solvent type coating composition.

European Patent Office

# EUROPEAN SEARCH REPORT

Application Number
EP 96 30 7231

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 005 230 (BAYER) * page 3, line 15 - page 26, line 20; claims; examples * | 1-8 | C08G18/79 |
| X | GB-A-1 310 688 (DEXTER) 21 March 1973 * page 1, line 17 - page 4, line 56; claim 1 * | 1 | |
| X | EP-A-0 291 699 (BAYER) * page 2, line 24 - page 4, line 52; claim 1 * | 1-6 | |
| X | EP-A-0 293 668 (BAYER) * page 2, line 41 - page 4, line 26; claims 1,3 * | 1-6 | |
| X | EP-A-0 515 161 (NIPPON PAINT) * page 2, line 34 - page 4, line 25; claims 1-6 * | 1-6 | |
| A | EP-A-0 512 198 (RHEOX INTERNATIONAL) * page 3, line 43 - page 4, line 46 * | 1 | TECHNICAL FIELDS SEARCHED (Int.Cl.6) C08G |

The present search report has been drawn up for all claims

| Place of search | Date of completion of the search | Examiner |
|---|---|---|
| THE HAGUE | 13 December 1996 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)